# Europäisches Patentamt
# European Patent Office
# Office européen des brevets

(19)

(11) Numéro de publication: **0 029 755**
**B1**

(12) **FASCICULE DE BREVET EUROPEEN**

(45) Date de publication du fascicule du brevet: **27.07.83**

(51) Int. Cl.³: **G 11 B 7/12**

(21) Numéro de dépôt: **80401450.4**

(22) Date de dépôt: **09.10.80**

(54) **Dispositif optique stigmatique d'émission-réception de rayonnements cohérents et tête optique d'enregistrement-lecture comprenant un tel dispositif.**

(30) Priorité: **21.11.79 FR 7928694**

(43) Date de publication de la demande:
**03.06.81 Bulletin 81/22**

(45) Mention de la délivrance du brevet:
**27.07.83 Bulletin 83/30**

(84) Etats contractants désignés:
**DE GB IT NL SE**

(56) Documents cités:
**FR - A - 2 198 203**
**FR - A - 2 386 051**

**JOURNAL OF SCIENTIFIC INSTRUMENTS, vol. 28, novembre 1951, no. 5, Londres GB W. WEINSTEIN et al.: "A beam splitter for non collimated light" pages 351—352.**

(73) Titulaire: **THOMSON-CSF**
**173, Boulevard Haussmann**
**F-75379 Paris Cedex 08 (FR)**

(72) Inventeur: **Arquie, Louis**
**"THOMSON-CSF" SCPI - 173, Bld Haussmann**
**F-75360 Paris Cedex 08 (FR)**
Inventeur: **Bricot, Claude**
**"THOMSON-CSF" SCPI - 173, Bld Haussmann**
**F-75360 Paris Cedex 08 (FR)**
Inventeur: **Lehureau, Jean-Claude**
**"THOMSON-CSF" SCPI - 173, Bld Haussmann**
**F-75360 Paris Cedex 08 (FR)**
Inventeur: **Le Merer, Jean-Pierre**
**"THOMSON-CSF" SCPI - 173, Bld Haussmann**
**F-75360 Paris Cedex 08 (FR)**
Inventeur: **Leterme, Dominique**
**"THOMSON-CSF" SCPI - 173, Bld Haussmann**
**F-75360 Paris Cedex 08 (FR)**
Inventeur: **Thirouard, Michel**
**"THOMSON-CSF" SCPI - 173, Bld Haussmann**
**F-75360 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

Courier Press, Leamington Spa, England.

# Dispositif optique stigmatique d'emission-reception de rayonnements coherents et tete optique d'enregistrement-lecture comprenant un tel dispositif

La présente invention se rapporte à un dispositif optique stigmatique d'émission-réception de rayonnements cohérents, plus particulièrement destiné à la détection d'une surface réfléchissante.

Lorsqu'on utilise des sources laser à semi-conducteur, se posent des problèmes spécifiques à ce type de source. Il est en effet connu qu'une des caractéristiques de ce type de source est la très forte divergence du faisceau émis.

Il est d'usage dans l'art connu d'associer aux sources laser un élément collimateur qui ne peut se réduire à une simple lentille. Cette disposition doit être complétée en aval de l'élément collimateur par un élément séparateur qui peut être un cube séparateur également associé à d'autres éléments optiques tels que lame quart d'onde, etc. selon l'application spécifique envisagée.

Dans l'art connu, il s'agit d'éléments discrets qui doivent notamment être disposés avec précision, d'une part, l'un par rapport à l'autre et, d'autre part, par rapport aux autres éléments optiques: source, détecteur.

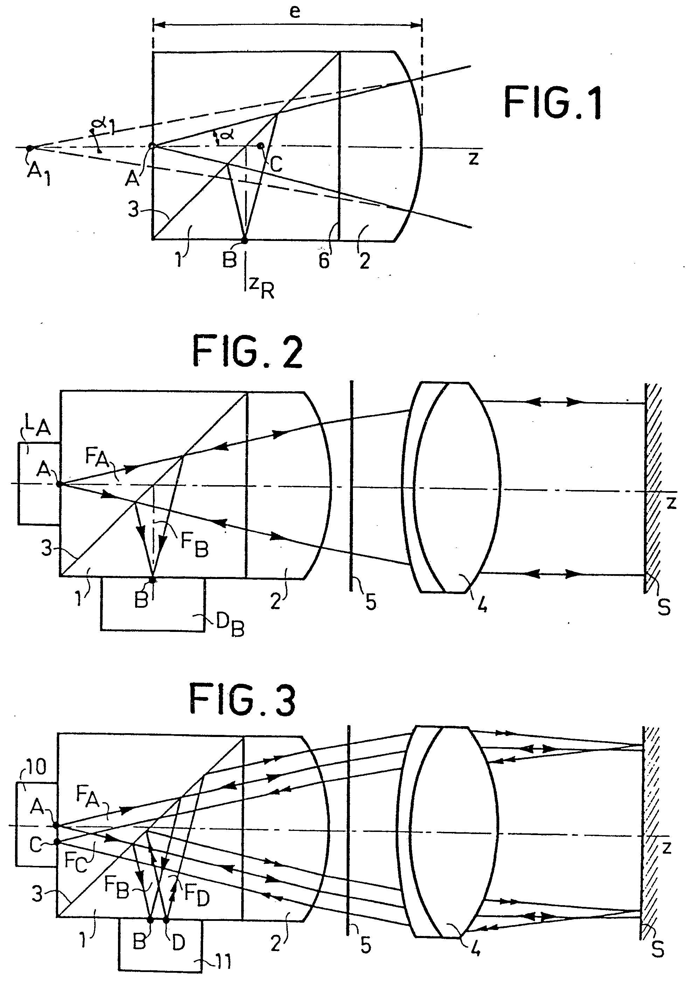

L'art connu concernant ce type de dispositif peut être illustré par exemple, par référence aux deux demandes de brevets FR—A—2 198 203: (notamment Fig. 3) et FR—A—2 386 051.

Le dispositif optique suivant l'invention assure la fonction d'émission d'un faisceau à partir d'une source laser à semi-conducteur, en diminuant la divergence d'un tel laser. Suivant un mode de réalisation de l'invention, ledit dispositif assure également la fonction de réception du faisceau réfléchi. Les deux fonctions precitées sont parfaitement découplées. Le dispositif optique comprend un nombre très réduit d'éléments, d'où une configuration simple, un faible encombrement et peu de réglages. Il utilise notamment la propriété connue des dioptres sphériques, auxquels on peut associer deux points stigmatiques dits points de Weierstrass, situés du côté de la concavité du dioptre. De tels dioptres sont facilement usinables du fait de leur surface sphérique et leur obtention en est aisée et peu coûteuse.

Une application notable du dispositif est une tête optique d'enregistrement-lecture par réflexion d'un disque optique. La souplesse d'utilisation: possibilité d'utiliser un ou deux lasers, découplage entre les faisceaux, permet d'utiliser le dispositif pour la lecture, l'enregistrement avec éventuellement contrôle et d'assurer simultanément la détection d'erreurs de focalisation et la détection de suivi radial. La tête obtenue peut être compacte et légère, les réglages aisés à réaliser, sans nécessiter un objectif à grand champ, donc coûteux.

L'invention a pour objet, un dispositif optique stigmatique d'émission-réception de rayonnements cohérents, comprenant au moins une source laser à semiconducteur et des moyens de détection opto-électroniques, caractérisé en ce qu'il comprend un bloc optique réfringent délimité par une première face plane et une face convexe de forme sphérique, l'un des points de Weierstrass du dioptre formé par la face convexe étant situé sur la face plane, celle-ci étant perpendiculaire à la droite joignant ce point de Weierstrass et le centre de la face sphérique, la source étant placée au voisinage de ce point de Weierstrass.

D'autres caractéristiques de l'invention apparaitront dans la description ci-après, en référence aux figures annexées parmi lesquelles:

—la figure 1 représente un dispositif optique selon l'invention;

—la figure 2 illustre un premier mode d'utilisation de l'invention;

—la figure 3 illustre un deuxième mode d'utilisation de l'invention;

—la figure 4 représente un premier mode de réalisation d'une tête optique pour disque optique;

—les figures 5, 6, 7 illustrent un procédé de détection d'erreur applicable à la tête optique de la figure 4;

—la figure 8 illustre un autre procédé de détection d'erreur;

—la figure 9 représente un deuxième mode de réalisation d'une tête optique pour disque optique;

—la figure 10 illustre un procédé de détection d'erreur applicable à la tête optique de la figure 9.

La figure 1 représente un dispositif optique selon l'invention. Il comprend un parallélépipède 1. Sauf mention contraire, dans la suite de la description, il s'agit d'un cube constitué de deux prismes collés. La surface de séparation 3 con-située par l'hypothénuse des deux cubes est traitée de façon à être séparatrice de polarisation: elle transmet en totalité des rayonnements ayant une polarisation donnée et elle réfléchit en totalité des rayonnements ayant une polarisation à 90° de la précédente. Une lentille plan-convexe 2, formée du même matériau que le cube, est collée sur l'une des faces, 6 du cube 1. Le centre C de la sphère formée par la face convexe de la lentille 2 est située sur un plan médian du cube. Son rayon de courbure R tel que le point A situé au point de recontre de l'axe optique z de la lentille 2 avec la face du cube opposée à la face 6 soit un point de Weierstrass du dioptre constitué par la surface sphérique de la lentille 2. En d'autres termes, le bloc optique constitué du cube 1 et de la lentille 2 forme du point A une image stig-matique au point $A_1$, dont on sait qu'elle est virtuelle si A est réel. Rappelons les conditions de Weierstrass: lorsque l'incide de réfraction commun au cube et à la lentille est n et lorsque le milieu extérieur est de l'air

$$CA = \frac{R}{n}, \quad CA_1 = nR.$$

La première condition donne la relation entre l'épaisseur e de l'ensemble et le rayon

$$R:R = e \; \frac{n}{n+1}.$$

Lorsque cette relation est vérifiée, si on place en A une source de rayonnement polarisé dans la direction correspondant à une transmission par la face 3, émettant un faisceau divergent de demi-angle au sommet $\alpha_0$ dans l'air, cet angle devient $\alpha$ dans le cube et le faisceau émergent de la lentille, issu du point virtuel $A_1$, a un demi-angle au sommet $\alpha_1$ avec

$$\sin \alpha_1 = \frac{\sin\alpha}{n}$$

$$et \; \sin\alpha = \frac{\sin\alpha o}{n}.$$

Par ailleurs, l'élément 1 étant cubique, le point B conjugué de A par rapport à la face 3 est situé sur une autre face du cube et est également un point stigmatique, si bien qu'un faisceau convergent au point virtuel $A_1$ arrivant sur la lentille 2 et ayant une polarisation à 90° de la précédente est réfléchi par la face 3 et converge au point B. Réciproquement, un faisceau issu de B polarisé à 90° du faisceau issu de A est réfléchi par la face 3 et se superpose au faisceau issu de A. Le fait que le parallélépipède 1 et la lentille 2 soient décrits comme deux éléments séparés n'est pas nécessaire à l'invention. Le bloc optique 1,2 peut également être réalisé de telle sorte que la face 6 n'est pas matérialisée.

Le dispositif décrit est destiné à être utilisé en association avec un laser semi-conducteur $L_A$ ayant son centre de phase A et un moyen de détection opto-électrique centré sur B ou au voisinage de B. Les rôles respectifs de A et de B peuvent être inversés, c'est à dire que le moyen de détection peut être situé en A, donc sur l'axe z et le laser au point conjugué B. La figure 2 illustre un premier mode d'utilisation de l'invention. Un objectif collimateur 4 d'axe optique confondu avec l'axe z est placé derrière la lentille 2 de façon que son foyer soit au point $A_1$ (Fig. 1). Cet objectif est conçu de façon à ne pas présenter d'aberrations sphériques pour les ouvertures de faisceau maximales fournies par le laser placé en A, l'ensemble du sytème optique devant rester stigmatique. Il peut s'agir par exemple d'un doublet et on obtient donc un faisceau parallèle qui éclaire une surface réfléchissante S. Si cette surface est perpendiculaire à l'axe z, le faisceau réfléchi est confondu avec le faisceau incident. Pour que ce faisceau se focalise en B, il faut que sa polarisation soit à 90° de la polarisation du faisceau issu de A. Pour cela, on place sur le trajet commun aux faisceaux incident et réfléchi une lame quart d'onde 5 soit entre la lentille 2 et l'objectif 4, soit entre l'objectif 4 et la surface S. La lame 5 est orientée, à 45° de la polarisation du faisceau incident, de sorte qu'après une traversée de la lame, on obtient une polarisation circulaire et après un aller et retour, on retrouve une polarisation linéaire, mais à 90° de la polarisation initiale. Cette séparation entre le faisceau issu du laser et le faisceau réfléchi pourrait éventuellement se faire sans lame quart d'onde et avec une surface de séparation 3 non séparatrice de polarisation mais simplement semi-transparente. Les moyens de détection $D_B$ placés en B ou au voisinage de B permettent d'une part de détecter la présence de la surface S, d'autre part de mesurer certaines caractéristiques du faisceau réfléchi: selon le cas, intensité, distribution spatiale ... A titre d'exemple, une photodiode centrée sur B permet d'évaluer le coefficient de réflexion de la surface S. Si la surface S est susceptible de ne pas être perpendiculaire à l'axe z, le faisceau réfléchi peut ne pas être confondu avec le faisceau incident et donc ne pas se focaliser en B. Il suffit de placer sur la face correspondante du cube 1 une matrice de cellules détectrices pour conaitre le decalage en position d'où l'on déduit l'angle de la surface S par rapport à un plan perpendiculaire à z.

Pour certaines applications, il peut être utile d'associer au dispositif deux sources lumineuses. Ce deuxième mode d'utilisation est représenté sur la figure 3. Il utilise le fait que, si seuls les points A et B respectent les conditions de stigmatisme, des points très voisins introduisent un astigmatisme négligeable. On dispose donc un premier laser semi-conducteur en A. Le faisceau $F_A$ après traversée de la lame quart d'onde 5, de l'objectif 4, réflexion sur la surface S et retour forme un faisceau $F_B$ qui se focalise en B. Un deuxième laser semi-conducteur est positionné sur la même face du cube que B, légèrement décalé. Ce deuxième laser délivre un faisceau $F_D$ polarisé à 90° du faisceau $F_A$. Le faisceau réfléchi par la surface S, $F_C$ se focalise au point C situé sur la même face que A, avec un décalage. Les décalages entre A et C d'une part et B et D d'autre part diovent être suffisants pour permettre le positionnement d'un laser à semi-conducteur et d'un détecteur, une photodiode par exemple, qui peuvent être compris dans un même boitier, respectivement 10 et 11. Typiquement, les décalages minimaux possibles sont de l'ordre de 50 $\mu m$. Les lasers positionnés en A et D ne sont pas nécessairement identiques, ni de même longueur d'onde. Si leurs longueurs d'onde sont distinctes, il est nécessaire de tenir compte de l'aberration chromatique dans leur positionnement: l'élément n'est plus tout à fait cubique.

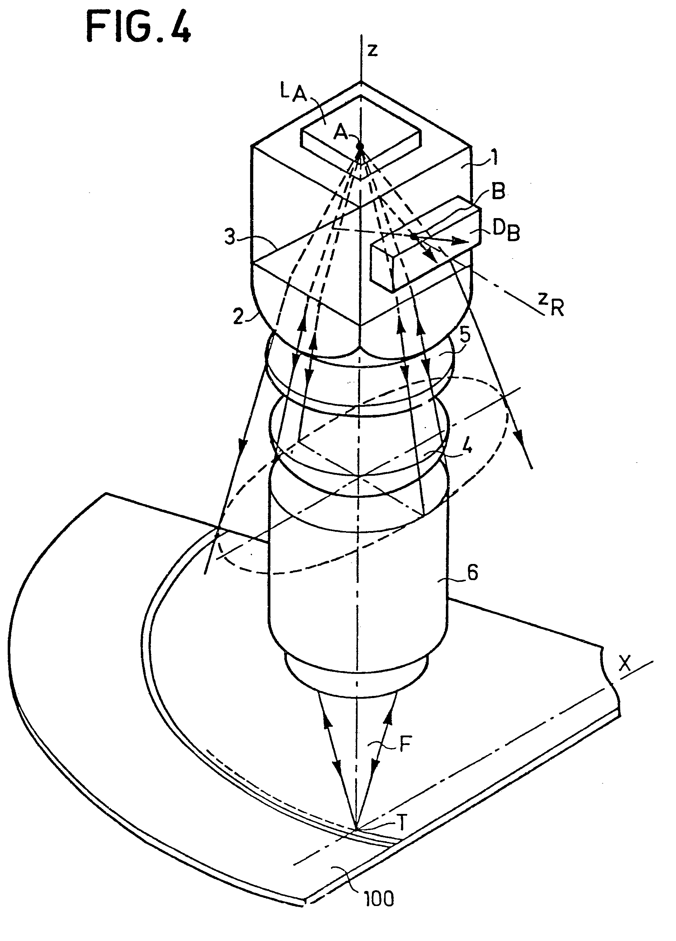

L'invention est notamment applicable au domaine de l'enregistrement-lecture d'un support d'information tel qu'un disque optique. La figure 4 représente un mode de réalisation d'une tête optique selon l'invention, utilisant le dispositif de la figure 2. La même tête optique peut être utilisée pour l'enregistrement, puis pour la lecture d'un disque réfléchissant 100 animé d'un mouvement de rotation, tandis que la tête est animée d'un mouvement radial. Une telle tête optique est destinée à former à partir du faisceau F fourni par un laser une tache quasi-ponctuelle T qui décrit une piste en spirale ou en cercles concentriques, grâce à la combinaison du mouvement de rotation et du mouvement radial. Le faisceau F est fourni par un laser $L_A$ qui est modulé par l'information à inscrire, dans le cas de l'enregistrement et qui délivre une puissance continue dans le cas de la lecture. Ce laser est placé au point A du dispositif optique d'émission-réception décrit plus haut en relation avec la figure 2. Derrière ce dispositif est disposé un objectif de focalisation 6 de même axe optique z disposé de façon à focaliser dans le plan du disque 100 le faisceau parallèle délivré par l'objectif 4. Le laser $L_A$ étant un laser à semi-conducteur son diagramme de rayonnement n'est pas isotrope. Son ouverture peut être par exemple de l'ordre de 10° dans la direction de la grande dimension de la face d'émission et de l'ordre de 25° dans la direction perpendiculaire, si bien que la projection du faisceau parallèle dans le plan de la pupille d'entrée de l'objectif 6 est elliptique, la rapport entre le grand axe et le petit axe étant de l'ordre de 4 pour des lasers classiques et pouvant descendre pour certains types de lasers jusqu'à 1,5. Il est préférable, notamment pour faciliter la lecture, d'obtenir une tache T circulaire, donc un faisceau F d'ouverture circulaire. C'est pourquoi la dimension de la pupille d'entrée de l'objectif est choisie en fonction du petit axe de l'ellipse, de sorte que cette pupille joue un effet de diaphragme. Il en résulte une perte de puissance, qui est sans importance si le laser $L_A$ est de puissance suffisante. A titre d'illustration, dans un procédé d'inscription par gravure appliqué à l'enregistrement optique d'informations numériques avec un débit de 10Mbits/s, l'énergie minimale nécessaire pour l'enregistrement est d'environ 3mW. Les pertes introduites par les différents éléments de la tête optique, surtout l'effet de diaphragme au niveau de l'objectif 6 peuvent être estimées à environ 75% de l'énergie fournie par le laser $L_A$, ce qui implique que l'on doit utiliser un laser de puissance minimale de crête 12 mW. L'information à enregistrer se présente sous la forme d'un signal électrique binaire qui est appliqué au laser de façon à faire varier sa puissance selon deux niveaux, par exemple 0 et 15 mW. Pour la lecture, on peut utiliser le même laser, en diminuant sa puissance de façon que la tâche de lecture n'ait aucun effet de gravure (1 mW de puissance suffit). Le fait d'utiliser le même laser permet de conserver la même tête pour l'enregistrement et la lecture, en changeant seulement la commande électrique du laser. On peut aussi utiliser deux têtes distinctes avec deux lasers différents. Dans tous les cas, un asservissement de puissance peut être avantageusement prévu, selon une technique classique qui consiste à utiliser le fait qu'une jonction semi-conductrice émet des rayonnements dans deux sens opposés. En plaçant un photodétecteur sur la face arrière du laser $L_A$, de façon qu'il reçoive le rayonnement émis dans le sens opposé au disque, on a une indication de la puissance émise que l'on peut maintenir constante par une boucle de rétro-action.

Le faisceau réfléchi par la surface du disque 100 est séparé du faisceau émis par le laser grâce à la lame quart d'onde 5 et à la surface séparatrice 3. Lorsque le faisceau F est parfaitement focalisé sur le disque, formant une tâche quasi ponctuelle T, le faisceau de retour $F_B$ se focalise au point B. Lors de la lecture, la puissance du faisceau $F_B$, qui peut être détectée au point B ou au voisinage de celui-ci par des moyens de détection $D_B$, est fonction de l'état de surface du disque au point T. La présence d'une empreinte gravée en creux implique une absence ou une diminution du pouvoir réfléchissant du disque. Au contraire, dans les zones non gravées, le faisceau est totalement réfléchi. Ainsi, la puissance du faisceau $F_B$ est modulée au fur et à mesure de la rotation du disque et de l'avance radiale de la tête, au rythme de la modulation de relief préalablement inscrite sur le disque. Par ailleurs, tant au cours de l'enregistrement que de la lecture, il est souhaitable que les moyens de détection $D_B$ puissent détecter les erreurs de focalisation (le point T n'est pas exactement dans le plan du disque) exprimées sous la forme d'un décalage en z, et les erreurs de suivi radial (le point T n'est pas situé sur la piste gravée, dans le cas de la lecture, ou sur la piste que l'on souhaite tracer généralement matérialisée sous la forme d'une piste pré-gravée dans le cas de l'enregistrement), exprimées sous la forme d'un décalage sur l'axe radial X du disque 100. Les procédés de détection d'erreurs connus dans le domaine de l'enregistrement optique doivent être adaptés à la configuration particulière de la tête optique de la figure 4.

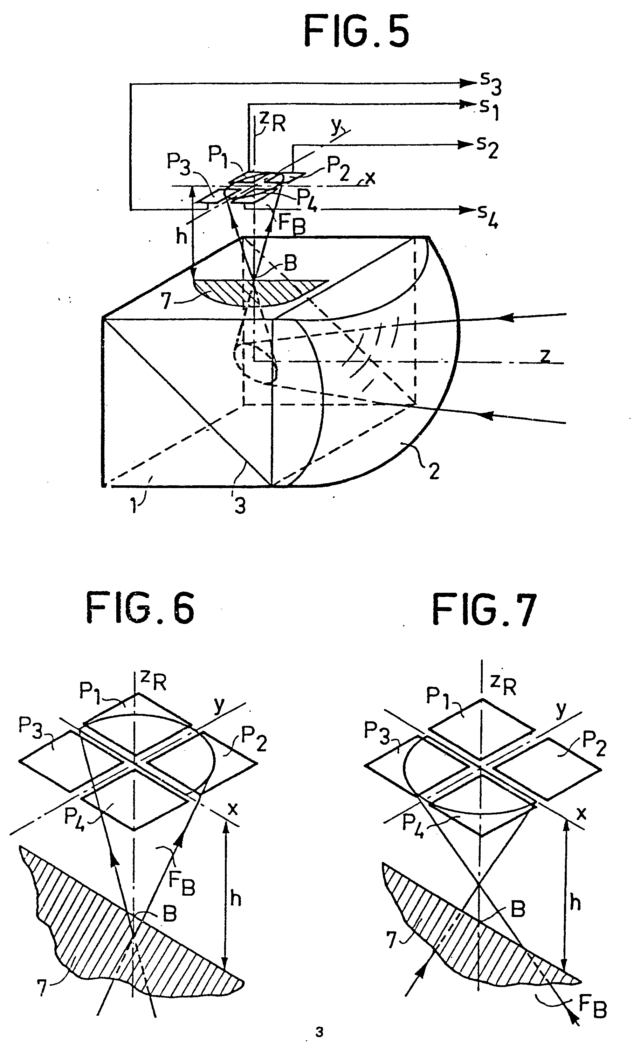

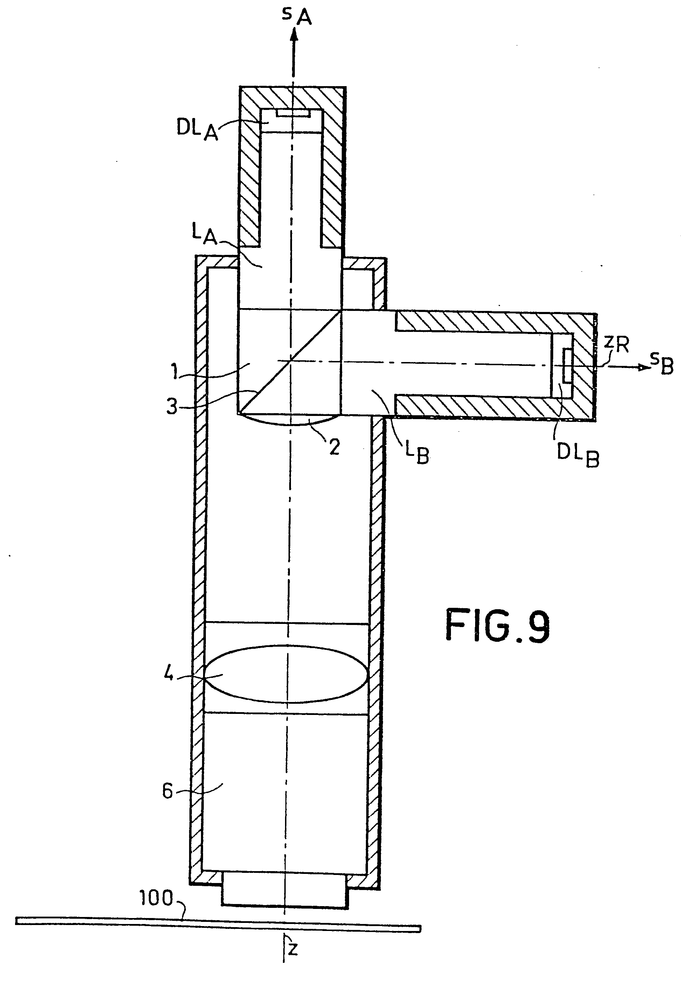

Un premier mode de réalisation des moyens de détection est représenté sur la figure 5. Il permet d'obtenir un signal d'erreur de suivi radial, un signal d'erreur de focalisation, et éventuellement un signal de lecture. Les moyens de détection comprennent 4 photodiodes $P_1$, $P_2$, $P_3$, $P_4$ disposées dans un plan x, y parallèle à la face du cube contenant le point B, à une distance h de cette face. Les 4 photodiodes sont disposées en carré autour de l'axe $z_R$, séparées par les axes x et y, le plus proche possible les unes des autres, et de façon qu'en l'absence de toute erreur, la puissance du faisceau $F_B$ se répartisse de façon égale dans les 4 photodiodes. La distance h est choisie de façon que, avec ou sans erreurs, la tache formée dans le plan x, y par le faisceau $F_B$ soit entièrement couverte par les photodiodes, de façon que celles-ci détectent la quasi-totalité de la puissance du faisceau $F_B$. Ainsi, la somme des signaux de sortie respectifs $s_1$, $s_2$, $s_3$, $s_4$ indique la présence ou non d'une empreinte sur le disque à l'emplacement de la tache T et constitue donc un signal de lecture. En l'absence d'erreur, le faisceau $F_B$ se focalise en B et la tache obtenue dans le plan x, y est circulaire et centrée sur l'axe $z_R$. En cas d'erreur de suivi radial, c'est à dire, en référence avec la figure 4, lorsque le point de focalisation T est décalé selon l'axe x par rapport à la piste prégravée ou à la piste porteuse d'information, seule une partie du faisceau F se trouve réflechie et l'intensité lumineuse n'est plus également répartie entre les 4 photodiodes car la tache est décalée suivant l'axe x, si la direction de celui-ci est choisie de façon qu'à un décalage de la tache T suivant l'axe X correspond un décalage du faisceau $F_R$ selon l'axe x. On obtient donc un signal d'erreur de suivi radial à partir de l'expression $(s_1 + s_3) — (s_2 + s_4)$.

Pour la détection des erreurs de focalisation, un cache 7 est disposé sur la face du cube 1 contenant le point B. Ce cache a un côté rectiligne passant par B, parallèle à x. En l'absence d'erreur, le faisceau $F_B$ étant focalisé en B, le cache 7 n'a aucun effet. Une erreur de focalisation conduit, suivant son signe, à obtenir un point de convergence à l'intérieur ou à l'extérieur du cube 1, mais toujours sur l'axe $z_R$. Sur la figure 6, le point de convergence est situé à l'intérieur du cube. Le cache 7 obture une demipupille du faisceau $F_B$, si bien que seules les photodiodes $P_1$, $P_2$ sont éclairées. Sur la figure 7, le point de convergence est situé à l'extérieur du cube. Le cache 7 joue le même rôle que précédemment, mais son image sur le plan de détection est inversée, si bien que seules les photodiodes $P_3$, $P_4$ sont éclairées.

Le signe de l'erreur de focalisation est donc donné par le signe de l'expression $(s_1 + s_2) — (s_3 + s_4)$.

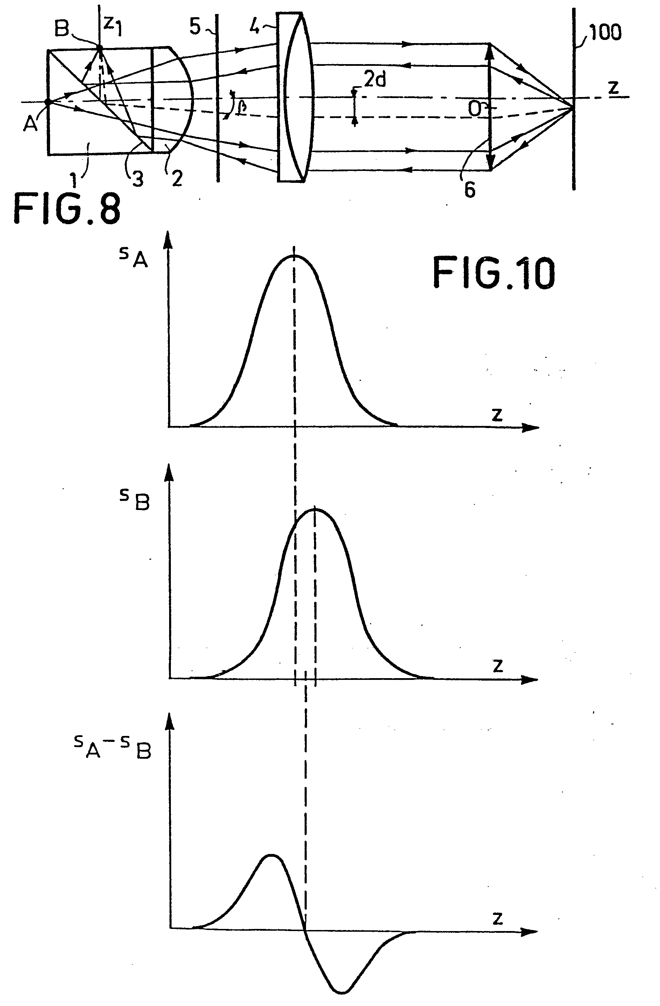

Un autre moyen de détection de l'erreur de focalisation, de mise en oeuvre plus simple que le précédent qui nécessite une grande précision dans la position du cache, est représenté sur la figure 8. La méthode utilisée, dite asymétrique, consiste à créer un décalage d entre les axes du dispositif optique 1, 2, 3, 4 et l'axe de l'objectif 6. Un tel décalage peut résulter simplement d'un mauvais réglage de l'alignement. L'axe z du dispositif 1, 2, 3, 4 ne passant pas par le centre optique O de l'objectif 6, le faisceau réfléchi par le dispositif 100 ne coïncide plus avec le faisceau incident, même en l'absence d'erreur de focalisation; les deux faisceaux sont décalés de 2d. Il en résulte, après la traversée de la lentille 4, un décalage angulaire: le faisceau converge au point B mais son axe forme un angle avec l'axe $z_1$. Une défocalisation provoque alors dans un plan de détection parallèle à la face du cube 1, un déplacement de la tache lumineuse qui peut être détecté, comme précédemment, au moyen de deux celluse photodétectrices, disposées de façon à recevoir la même fraction d'énergie lumineuse lorsque l'erreur de focalisation est nulle. L'erreur de suivi radial est détectée de la même façon que précédemment, si bien qu'il est nécessaire de disposer de 4 cellules. Il faut d'autre part faire en sorte que les directions de déplacement de la tache lumineuse détectée soient perpendiculaires, donc que le décalage d créé entre l'axe z et l'axe optique de l'objectif corresponde à un décalage sur le disque dans une direction tangentielle aux sillons enregistrés. Au lieu de disposer les 4 cellules photodétectrices dans un plan parallèle du cube, on peut envisager de les placer sur la face du cube contenant le point B, à la condition que l'écart entre ces cellules soit inférieur au diamètre minimal de la tache formée en B. A titre indicatif avec un laser $L_A$ dont la pupille d'émission a pour dimensions: 2 m × 5 m, la tache formée en B a un diamètre de l'ordre de 5 m. Certaines techniques de fabrication de photodiodes permettent d'obtenir un écart de 1 m environ, donc inférieur au diamètre de la tache lumineuse.

Selon un autre mode de réalisation de tête optique, il est prévu deux lasers semi-conducteurs, l'un étant modulé et destiné à l'enregistrement, l'autre étant destiné à la' lecture, ce qui permet un contrôle de l'enregistrement au fur et à mesure de celui-ci Il a été décrit, en référence à la figure 3, un moyen d'associer au bloc 1, 2 deux lasers et deux photo-détecteurs. Toutefois, la réalisation en est délicate, pour des raisons technologiques. Dans la tête optique représentée sur la figure 9, le problème de disposer sur une même face, très proche l'un de l'autre, deux éléments opto-électroniques a été évité. Pour cela, est utilisée une propriété des lasers semi-conducteurs consistant en une augmentation de la puissance lumineuse émise par un laser semi-conducteur lorsqu'une partie de celle-ci est réinjectée dans le laser. Ainsi, la présence d'un miroir en face du dispositif optique de l'invention provoque une augmentation de puissance que l'on détecte facilement à l'extrémité opposée du laser. Le dispositif de la figure 9 comporte donc deux lasers $L_A$ et $L_B$ dont les centres de phase sont positionnés proches des points A et B et deux photodiodes $DL_A$ et $DL_B$ accolées sur les faces arrière respectives des deux lasers. La tache de lecture obtenue sur le disque doit être légèrement décalée en arrière de la tache d'enregistrement, sur le même sillon. Ce de'calage est obtenu quasi automatiquement par les erreurs de positionnement car il n'est pas possible que les deux lasers coïncident parfaitement avec les points A et B. Un réglage fin des emplacements des deux taches est effectué par rotation du bloc 1, 2 par rapport à l'axe z.

Par ailleurs, comme on le verra plus loin, à des fins de détection d'erreur de focalisation, les deux centres de phase ne sont pas rigoureusement conjugués par rapport à la face 3 mais ont entre eux un léger décalage sur les axes z et $z_R$. Le laser non modulé $L_B$ a une polarisation à 90° de celle du laser $L_A$. Le tête ne comporte pas de lame quart d'onde, de façon que, après réflexion sur le disque 100, le faisceau émis par le laser $L_A$ soit réinjecté dans celui-ci et que le faisceau émis par le laser $L_B$ soit également réinjecté dans celui-ci. Le disque ne joue le rôle de miroir que dans ses parties non gravées. La présence d'une empreinte gravée diminue la puissance lumineuse du faisceau réfléchi de lecture, donc la puissance émise par ce laser et détectée par la photodiode $DL_B$ qui fournit donc en sortie un signal de lecture $s_B$. On obtient une indication d'erreur de focalisation à partir de la différence entre les signaux de sortie des deux photodiodes $s_A$ et $s_B$, grâce au décalage en z entre les deux lasers mentionnés plus haut. On peut voir en effet sur la figure 10 les variations des signaux $s_A$ et $s_B$ en fonction de l'abscisse sur l'axe z du disque 100. Chaque courbe passe par un maximum lorsque le faisceau correspondant se focalise sur le disque mais les deux faisceaux n'étant pas simultanément bien focalisés, la courbe de variation de la différence $s_A$—$s_B$ fournit non seulement une indication de la défocalisation mais également le signe de l'erreur de focalisation, cette deuxième indication n'étant pas fournie par les signaux $s_A$ et $s_B$ seuls. Dans l'application de cette méthode, il faut tenir compte du fait que l'un des faisceaux est modulé et l'autre non. Le type de modulation est donc choisi de façon que l'intensité lumineuse ne soit jamais nulle, ce qui supprimerait le signal $s_A$. A titre d'exemple, on peut avoir une modulation à deux niveaux: 1 mW, 15 mW, tandis que la puissance du laser de lecture $L_B$ reste constamment égale à 1 mW. Les variations des signaux $s_A$ et $s_B$ dues à la modulation peuvent être éliminées par filtrage, car elles one généralement une fréquence beaucoup plus élevée que la fréquence d'erreur. Comme pour la tête optique à un laser, représentée sur la figure 4, il peut être prévu un asservissement en puissance des lasers.

Pour obtenir un signal d'erreur de suivi radial, un moyen consiste à prévoir avant tout enregistrement sur le disque une piste prégravée vobulée à une fréquence prédéterminée. Une détection synchrone du signal de lecture par rapport au signal de vobulation fournit l'erreur de suivi, suivant une méthode classique pour ce genre de détection. Les signaux $s_A$ et $s_B$ peuvent être utilisés. La boucle d'asservissement doit être prévue plus lente que les variations des erreurs, de façon à ne pas perturber la détection de ces erreurs, celles-ci étant nulles en valeur moyenne.

L'invention n'est pas limitée aux modes de réalisation de tête optique décrits ci-dessus, notamment quant au mode de détection des erreurs, donc à la structure des moyens de détection opto-électriques. Quel que soit le mode de détection utilisé, la correction des erreurs en fonction des signaux d'erreurs obtenus peut s'effectuer de manière classique, par exemple au moyen d'un moteur solidaire de la tête, tel que décrit dans la demande de brevet français déposée par la demanderesse sous le n° 78 34 649, et publiée sous le n° 2 443 734.

Par ailleurs, les modes de réalisation décrits se rapportent à des têtes optiques compactes dont tous les éléments sont mécaniquement solidaires. Il peut être préférable de séparer l'objectif 6 et le dispositif d'émission-réception constitué du bloc 1—2 associé aux lasers et aux moyens de détection, du doublet 4, et éventuellement de la lame quart d'onde 5. La tête optique est alors constituée de deux parties séparées mécaniquement: le dispositif d'émission-réception fixe et un élément mobile constitué par l'objectif et un miroir de renvoi. Pour la détection des erreurs selon la méthode asymétrique décrite ci-desses, il est nécessaire que les cellules photodétectrices soient dans le plan contenant le point B.

**Revendications**

1. Dispositif optique stigmatique d'émission-réception de rayonnements cohérents, comprenant au moins une source laser à semi-conducteur ($L_A$) et des moyens de détection opto-électroniques ($D_B$), caractérisé en ce qu'il comprend un bloc optique réfringent (1—2) délimité par une première face plane et une face convexe de forme sphérique, l'un des points de Weierstrass (A) du dioptre (2) formé par la face convexe étant situé sur la face plane, celle-ci étant perpendiculaire à la droite (Z) joignant ce point de Weierstrass (A) et le centre de la face sphérique ($C_1$), la source ($L_A$) étant placée au voisinage de ce point.

2. Dispositif optique selon la revendication 1, caractérisé en ce qu'il comprend en outre des moyens stigmatiques collimateurs (4) situés sur le trajet du faisceau laser à l'extérieur du bloc optique permettant de le rendre parallèle.

3. Dispositif optique selon la revendication 2, caractérisé en ce que le bloc optique est constitué d'un parallélépipède (1) accolé à une lentille plan-convexe (2).

4. Dispositif optique selon la revendication 3, destiné à éclairer une surface réfléchissante (S), cette surface étant placée sur le trajet du faisceau parallèle, et à détecter le rayonnement réfléchi, caractérisé en ce que le parallélépipède (1) est constitué de deux prismes droits accolés, la surface de séparation (3) entre les deux prismes étant inclinée selon la bissectrice du dièdre formé par la première face plane et une autre face plane du parallélépipède, et étant transmissive pour le faisceau issu de la source laser ($L_A$) et réfléchissante pour le faisceau réfléchi, les moyens de détection ($D_B$) étant placés au voisinage du point conjugué (B) de la source par rapport à la surface de séparation.

5. Dispositif optique selon la revendication 4, caractérisé en ce que, le faisceau issu de la source (L$_A$) étant polarisé linéairement, la surface de séparation (3) faisant office de sélecteur de polarisation de façon à transmettre ce faisceau, le dispositif comprend en outre des moyens biréfringents (5) situés sur le trajet des faisceaux du côté convexe du bloc optique, de façon que la polarisation du faisceau réfléchi soit à 90° de celle du faisceau issu de la source.

6. Dispositif optique selon la revendication 5, caractérisé en ce que les moyens biréfringents (5) sont constitués d'une lame quart d'onde.

7. Dispositif optique selon la revendication 3, destiné à l'éclairement d'une surface réfléchissante (S), cette surface étant placée sur le trajet du faisceau parallèle, caractérisé en ce que le parallélépipède (1) est constitué de deux prismes droits accolés et en ce qu'il comprend une deuxième source laser à semi-conducteur, placée au voisinage (D) du point conjugué (B) de la première source par rapport à la surface de séparation (3), la surface de séparation entre les deux prismes étant inclinée selon la bissectrice du dièdre formé par la première face plane et une autre face plane du parallélépipède, et étant transmissive pour le faisceau issu de la première source et réfléchissante pour le faisceau issu de la deuxième source.

8. Dispositif optique selon la revendication 7, caractérisé en ce que, les faisceaux issus des deux sources étant polarisés linéairement respectivement à 90° l'un de l'autre, la surface de séparation (3) est séparatrice de polarisation de façon à transmettre le faisceau issu de la première source.

9. Dispositif optique selon l'une quelconque des revendications 7 ou 8, caractérisé en ce que les moyens de détection comprennent au moins deux détecteurs (DL$_A$, DL$_B$) recueillant respectivement les rayonnements issus des extrémités arrière des sources laser (L$_A$, L$_B$).

10. Tête d'enregistrement-lecture d'un support d'information mobile enregistrable ou lisible optiquement par réflexion par un rayonnement focalisé, comprenant un dispositif d'émission (L$_A$) d'au moins un faisceau parallèle d'enregistrement-lecture et un objectif (6) focalisant le faisceau sur une piste prédéterminée du support, caractérisée en ce qu'elle comprend un dispositif d'émission-reception selon l'une quelconque des revendications précédentes.

11. Tête d'enregistrement-lecture d'un support d'information mobile enregistrable et lisible optiquement par réflexion par un rayonnement focalisé comprenant un dispositif d'émission (L$_A$) d'un faisceau d'enregistrements, et d'un faisceau de lecture (L$_B$), et un objectif de focalisation (6), caractérisée en ce qu'elle comprend un dispositif d'émission-réception selon la revendication 9, les deux lasers étant positionnés de telle façon que les faisceaux émis soient focalisés par l'objectif en deux points décalés par rapport à l'axe de l'objectif (Z), les deux détecteurs (DL$_A$, DL$_B$) fournissant des signaux dont la différence est caractéristique de l'erreur de focalisation.

## Claims

1. Stigmatic optical device for transmission-reception of coherent radiation, comprising at least one semi-conductor laser source (L$_A$) and opto-electronic detection means (D$_R$) characterized in that it comprises an optical refringent block (1—2) defined by a first plane face and a spherical convex face, one of the Weierstrass's points (A) of the diopter (2) formed by the convex face being located on the plane face, the latter being perpendicular to a straight line (Z) connecting this Weierstrass's point (A) with the center of the spherical face, the source (L$_A$) being located in the neighborhood of this point.

2. Optical device in accordance with claim 1, characterized in that it further comprises stigmatic collimation means (4) located on the path of the laser beam outside the optical block for collimating the same.

3. Optical device in accordance with claim 2, characterized in that the optical block is formed of a parallelepiped (1) joined with a plane-convex lens (2).

4. Optical device in accordance with claim 3, for illuminating a reflecting surface (S) located on the path of the parallel beam and detecting the reflected radiation, characterized in that the parallelepiped (1) is formed of two joined rectangular prisms, the interface (3) between the two prisms being inclined along the bisector of the bihedron formed by the first plane face and another plane face of the parallelepiped, and being transmissive to the beam from the laser source (L$_A$) and reflecting to the reflected beam, the detection means (D$_B$) being located in the neighborhood of the conjugate point (B) of the source with respect to the interface.

5. Optical device in accordance with claim 4, characterized in that, the beam from the source (L$_A$) being plane polarized, the interface (3) forming a polarization selector in a manner to transmit this beam, the device further comprising birefringent means (5) located on the path of the beams on the convex side of the optical block, in such a manner that the polarization of the reflected beam is twisted at 90° from that of the beam from the source.

6. Optical device in accordance with claim 5, characterized in that the birefringent means (5) are formed of a quarter-wavelength plate.

7. Optical device in accordance with claim 3, for illuminating a reflecting surface (S) located on the path of the parallel beam, characterized in that the parallelepiped (2) is formed of two joined rectangular prisms and in that it comprises a second semiconductor laser source located in the neighborhood (D) of the conjugate point (B) of the first source with respect to the interface (3), the interface between the two prisms being inclined along the bisector of the bihedron formed by the first plane face and another plane face of the parallelepiped, and being transmissive to the beam from the first source and reflecting to the beam of the second source.

8. Optical device in accordance with claim 7, characterized in that, the beams from the two sources being plane polarized at 90° from each other, the interface (3) is polarization separative in a manner to transmit the beam from the first source.

9. Optical device in accordance with any of claims 7 and 8, characterized in that the detection means comprise at least two detectors ($DL_A$, $DL_B$) receiving the radiations from the rear ends of the laser sources ($L_A$, $L_B$), respectively.

10. Writing-reading head for a movable information carrier susceptible of optical writing or reading by reflection of a focused radiation, comprising a device ($L_A$) for emitting at least one parallel writing-reading beam and an objective (6) focusing this beam onto a predetermined track of the carrier, characterized in that it comprises a transmission-reception device in accordance with any of the preceding claims.

11. Writing-reading head for a movable information carrier susceptible of optical writing and reading by reflection of a focused radiation, comprising a device ($L_A$) for the emission of a writing beam and a device ($L_B$) for the emission of a reading beam, and a focusing objective (6), characterized in that it comprises a transmission-reception device in accordance with claim 9, the two lasers being positioned in such a manner that the beams emitted thereby are focused by the objective onto two points shifted with respect to the axis of the objective (Z), the two detectors ($DL_A$, $DL_B$) providing signals the difference of which is representative of the focusing error.

**Patentansprüche**

1. Stigmatische optische Sende/Empfängervorrichtung für kohärente Strahlung, mit wenigstens einer Halbleiterlaserquelle ($L_A$) und optoelektronischen Detektionsmitteln ($D_B$), dadurch gekennzeichnet, daß sie einen brechenden optischen Block (1—2) enthält, der durch eine erste ebene Fläche und eine kugelförmige konvexe Fläche begrenzt ist, wobei einer der Weierstraß'schen Punkte (A) des durch die konvexe Fläche gebildeten Diopters (2) auf der ebenen Fläche liegt, welche senkrecht zu der Geraden (Z) ist, die diesen Weierstraß'schen Punkt (A) mit dem Zentrum der kugelförmigen Fläche verbindet, wobei die Quelle ($L_A$) in der Nähe dieses Punktes angeordnet ist.

2. Optische Vorrichtung nach Anspruch 1, dadurch gekennzeichnet, daß sie ferner stigmatische Kollimatormittel (4) umfaßt, die auf dem Weg des Laserstrahls außerhalb des optischen Blocks angeordnet sind und dieses parallel machen.

3. Optische Vorrichtung nach Anspruch 2, dadurch gekennzeichnet, daß der optische Block aus einem Quader (1) gebildet ist, der an eine plankonvexe Linse (2) angefügt ist.

4. Optische Vorrichtung nach Anspruch 3, die dazu bestimmt ist, eine reflektierende Oberfläche (S) zu beleuchten, welche auf der Bahn des parallelen Strahls angeordnet ist, und zur Detektion der reflektierten Strahlung bestimmt ist, dadurch gekennzeichnet, daß der Quader (1) aus zwei aneinandergefügten rechtwinkligen Prismen gebildet ist, wobei die Trennfläche (3) zwischen den beiden Prismen entlang der Winkelhalbierenden des Zweiflachs geneigt ist, das durch die erste ebene Fläche und eine weitere ebene Fläche des Quaders gebildet ist, und für das von der Laserquelle ($L_A$) abgegebene Bündel durchlässig und für den reflektierten Strahl reflektierend ist, und wobei die Detektionsmittel ($D_B$) in der Nähe des konjugierten Punktes (B) der Quelle in bezug auf die Trennfläche angeordnet sind.

5. Optische Vorrichtung nach Anspruch 4, dadurch gekennzeichnet, daß bei linearer Polarisation des von der Quelle ($L_A$) abgegebenen Strahls die Trennfläche (3) als Polarisationsdiskriminator wirkt, so daß dieser Strahl durchgelassen wird, und die Vorrichtung ferner doppelbrechende Mittel (5) umfaßt, die auf dem Weg des Strahls auf der konvexen Seite des optischen Blocks so angeordnet sind, daß die Polarisation des reflektierten Strahls um 90° gegen die des von der Quelle abgegebenen Strahls verdreht ist.

6. Optische Vorrichtung nach Anspruch 5, dadurch gekennzeichnet, daß die doppelbrechenden Mittel (5) durch ein Viertelwellenlängenplättchen gebildet sind.

7. Optische Vorrichtung nach Anspruch 3, die dazu bestimmt ist, eine reflektierende Oberfläche (S) zu beleuchten, die auf dem Weg des parallelen Strahls liegt, dadurch gekennzeichnet, daß der Quader (1) aus zwei rechtwinkligen aneinandergefügten Prismen gebildet ist und daß sie eine zweite Halbleiter-Laserquelle umfaßt, die in der Nähe (D) des konjugierten Punktes (B) der ersten Quelle in bezug auf die Trennfläche (3) angeordnet ist, wobei die Trennfläche zwischen den beiden Prismen entlang der Winkelhalbierenden des Zweiflachs geneigt ist, das durch die erste ebene Fläche und eine weitere ebene Fläche des Quaders gebildet ist, und für den von der ersten Quelle abgegebenen Strahl durchlässig und für den von der zweiten Quelle abgegebenen Strahl reflektierend ist.

8. Optische Vorrichtung nach Anspruch 7, dadurch gekennzeichnet, daß die von den beiden Quellen abgegebenen Strahlen mit einer gegenseitigen Verdrehung um 90° linear polarisiert sind und die Trennfläche (3) eine Polarisationstrennung derart bewirkt, daß der von der ersten Quelle abgegebene Strahl durchgelassen wird.

9. Optische Vorrichtung nach Anspruche 7 oder 8, dadurch gekennzeichnet, daß die Detektionsmittel wenigstens zwei Detektoren (DL$_A$, DL$_B$) umfassen, welche jeweils die von der Rückseite eines der Laserquellen (L$_A$, L$_B$) abgegebene Strahlung aufnehmen.

10. Schreib/Lesekopf für einen beweglichen Informationsträger, der optisch beschrieben bzw. ausgelesen werden kann durch Reflexion einer fokussierten Strahlung, mit einer Vorrichtung (L$_A$) zum Aussenden wenigstens eines parallelen Schreib/Lesebüdels und einem Objektiv (6), welches das Bündel auf eine vorbestimmte Spur des Trägers fokussiert, dadurch gekennzeichnet, daß er eine Sende/Empfangsvorrichtung nach einem der vorstehenden Ansprüche umfaßt.

11. Schreib/Lesekopf für einen beweglichen Informationsträger, der optisch beschrieben und ausgelesen werden kann durch Reflexion einer fokussierten Strahlung, mit einer Vorrichtung (L$_A$) zum Aussenden eines Aufzeichnungsbündels und einer Vorrichtung (L$_B$) sum Aussenden eines Lesebündels sowie einem Fokussierobjektiv (6), dadurch gekennzeichnet, daß er eine Sende/Empfangsvorrichtung nach Anspruch 9 umfaßt und die beiden Laser so angeordnet sind, daß die abgegebenen Strahlen durch das Objektiv an zwei Punkten fokussiert werden, die in bezug auf die Achse des Objektivs (Z) versetzt sind, wobei die zwei Detektoren (DL$_A$, DL$_B$) Signale abgeben, deren Differenz charakteristisch für den Fokussierfehler ist.

FIG.1

FIG. 2

FIG.3

# FIG.4

# FIG.5

# FIG.6

# FIG.7

FIG.9

0 029 755

FIG.8

FIG.10